# EUROPEAN PATENT SPECIFICATION

(11) **EP 3 260 017 B1**
(45) Date of publication and mention of the grant of the patent: **20.02.2019**
(21) Application number: 17174118.4
(22) Date of filing: 01.06.2017
(51) Int. Cl.: A47B 97/00, B29C 45/16, B29C 45/00, B29C 45/14, F16B 37/14

(54) **HOLE COVER CAP AND METHOD FOR THE PRODUCTION THEREOF**
LOCHABDECKUNGSKAPPE UND HERSTELLUNGSVERFAHREN
BOUCHON DE TROU ET PROCÉDÉ DE FABRICATION ASSOCIÉ

(30) Priority: 01.06.2016 IT UA20164037
(43) Date of publication of application: 27.12.2017
(73) Proprietor: ITALFELTRI S.r.l., 35020 Ponte san Nicolo' (IT)
(72) Inventor: BORSATO, Henry, 35020 Saonara (IT)
(74) Representative: Gallo, Luca

(56) References cited:
- EP-A2- 1 839 952
- WO-A1-99/04175
- WO-A1-2010/105780
- FR-A1- 2 827 805
- GB-A- 2 046 392
- US-A- 4 583 651

## Description

The present patent application relates to a hole cover cap and a method for the production thereof.

In particular, the present invention relates to a method for the production of a hole cover cap designed to be engaged into a hole/opening in a piece of furniture/wall so as to hide said hole/opening by covering it; to which the following description will make explicit reference without thereby losing generality.

Currently, holes or aesthetic imperfections in pieces of furniture or walls can be covered/hidden by means of two different types of caps, the so-called "hole cover caps".

Hole cover caps belonging to a first widely used type comprise rigid caps made of plastic material formed by a single body comprising a disc-shaped head with a reduced thickness, and a stem extending centrally from the head. In use, the stem of the hole cover cap is manually engaged into an opening/hole of the piece of furniture so as to cause the disc-shaped head to be arranged in abutment against the outer surface of the piece of furniture surrounding the hole, so as to cover/close/hide the same.

Hole cover caps belonging to this first type are manufactured by means of an injection moulding process which essentially comprises injecting a liquid plastic material, generally polypropylene, into the inner chamber of a mould. The moulding process allows for obtaining a monochrome cap, i.e. a cap in which the disc-shaped head and the stem have the same colour since they are produced with the same plastic material.

However, the range of colours of the plastic material used by the above-described method is restricted. Therefore, the method described above allows the provision of hole cover caps that are potentially suitable to be used only on a limited number of furniture surfaces, i.e. surfaces with the same colour as the plastic material used to make the cap. Otherwise, i.e. when the colour of the surface is different from the plastic material used for moulding the cap, the exposed surface of the disc-shaped head of the same is not aesthetically homogeneous with the exposed surface of the piece of furniture, but is distinct from the same, thus causing an unsatisfactory aesthetic result. Moreover, the aesthetic result is also unsatisfactory when the surface to be hidden has a complex finishing, such as a finishing similar to wood, metal or a multicoloured finishing, etc.

A second type of hole cover cap comprises thin and flexible disc-shaped elements made of plastic material, generally ABS (Acrylonitrile Butadiene Styrene), which have an exposed outer surface and an adhesive inner surface which, in use, is adhered directly onto the surface portion surrounding the hole/opening to be covered.

The disc-shaped elements offer a high range of surface finishes, but are subject to detachment.

Patent US 4 583 651 describes a bottle cap provided with a head and with a stem that engages into the mouth of the bottle so as to seal it. The spherical head of the bottle cap described in US 4 583 651 is totally unsuited to hide a hole formed on a piece of furniture or wall, as it changes the aesthetic appearance of the flat surface of the piece of furniture or of the wall surrounding said hole. A spherical head extending in a cantilever fashion from the piece of furniture would be unacceptable to the user.

Also patent applications GB 2 046 392 A and WO 2010/105780 A1 are known in the state of the art, which describe a plastic cap for screws and, respectively, a method for decorating plastic parts.

In this respect, the Applicant has therefore carried out an in-depth study aimed at finding a solution which allows for specifically achieving the object of providing a method for the production of hole cover caps, which are able to offer a wide range of surface finishes, are not subject to detachment, and are easily manually removable from the opening/hole in which they are engaged.

This object is achieved by the present invention, in that it relates to a method for the production of one or more hole cover caps, and a hole cover cap as defined in the appended claims.

The present invention will now be described with reference to the accompanying drawings, which illustrate a non-limiting embodiment thereof, in which:
- Figure 1 is a schematic perspective view of a hole cover cap manufactured according to the teachings of the present invention;
- Figure 2 is the section I-I of the hole cover cap shown in Figure 1;
- Figures 3 to 11 schematically show as many operating steps of the method for producing the hole cover cap shown in Figure 1 according to a preferred embodiment;
- Figures 12 to 17 schematically show as many operating steps of a method for producing the hole cover cap shown in Figure 1 according to an alternative embodiment;
- Figure 18 is a perspective view of a plastic object manufactured during the implementation of the method which is the object of the present invention;
- Figure 19 is a plan view of the object shown in Figure 18;
- Figure 20 is a side elevation view, with parts enlarged for clarity, of the object shown in Figure 18 coupled to the coating sheet.

The present invention will now be described in detail with reference to the accompanying drawings in order to allow a skilled person to implement it and use it. Various modifications to the described embodiments will be readily apparent to the skilled people and the general principles described may be applied to other embodiments and applications without however departing from the protective scope of the present invention as defined in the appended claims. Therefore, the present invention should not be regarded as limited to the embodiments described and illustrated herein, but it must be given the broadest protective scope consistent with the principles and features described and claimed herein.

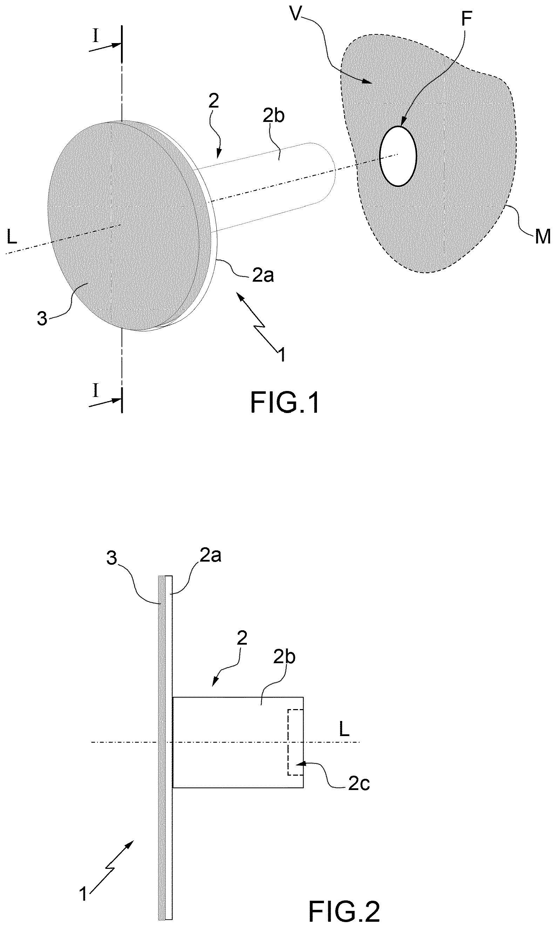

With reference to Figures 1 and 2, number 1 schematically indicates, as a whole, a hole cover cap, which is structured to be manually engaged, in a stable, yet easily removable way, into a hole/opening F in a piece of furniture M and/or a wall (not shown), so as to hide said hole/opening F by covering it. It is understood that the term "hole cover cap" also refers to a cap capable of covering a bush and/or an eccentric and/or the like.

The hole cover cap 1 comprises: a monolithic supporting body 2 made of a rigid plastic material, provided with a headpiece or head 2a, and with a central stem 2b which extends along a longitudinal axis L; and a film or coating layer 3 which is permanently coupled to the outer surface of the head 2a located on the opposite side with respect to the stem 2b, and whose exposed surface is aesthetically equivalent (equal) to the exposed outer surface V of the piece of furniture M (wall) in which the hole cover cap 1 is installed.

In the embodiment shown in Figures 1 and 2, the supporting body 2 is substantially shaped like a mushroom. According to a preferred exemplary embodiment, the head 2a may comprise a plate-like, preferably disc-shaped, portion, which lies on a plane that is preferably transverse to the axis L, while the stem 2b extends in a cantilever fashion from the inner surface of the head 2a on the opposite side with respect to the outer surface on which the coating layer 3 is fixed.

According to a preferred exemplary embodiment, the head 2a is thin and is structured so that it can be arranged with its inner surface opposite to the coating layer 3, in abutment against the outer surface of the piece of furniture surrounding the hole in which the stem 2b is engaged so as to be approximately coplanar with the outer surface of said piece of furniture, so as to hide the hole.

According to a preferred embodiment, the supporting body 2 is made of a plastic material. The plastic material may be thermoformable and may comprise according to choice at least one of the following materials: ABS, PP (Polypropylene), PS (Polystyrene), PA (Polyamide), PE (Polyethylene), SAN (copolymer) or the like.

As regards the coating layer 3, instead, it may comprise according to choice at least one of the following materials: ABS, MDF (Medium Density Fibreboard), PVC (Polyvinyl Chloride), PE, melamine edging, decorative and printed papers, or the like.

The exposed surface of the coating layer 3 has an aesthetic finishing that can conveniently be the same as and/or substantially similar to that of the exposed outer surface of the piece of furniture/wall in which the hole cover cap 1 is installed. For example, the exposed surface of the coating layer 3 can be conveniently over-printed so that it exhibits an aesthetic effect that reproduces a surface of metal (for example aluminium) or wood or other materials/finishes.

The coating layer 3 has a reduced thickness (is thin) and is shaped such that its outer edge overlaps the outer edge of the head 2a so as to coat the outer surface of the head 2a meant to remain visible when the hole cover cap 1 is engaged in the hole/opening F.

According to a preferred exemplary embodiment, the coating layer 3 may have a thickness, measured along a direction parallel to the longitudinal axis L, of between approximately 0.1 mm and approximately 1 mm, preferably of approximately 0.4 mm. As regards the head 2a, instead, it may have a thickness, measured along a direction parallel to the longitudinal axis L, of between approximately 0.1 mm and approximately 0.4 mm, preferably of approximately 0.2 mm.

According to a preferred exemplary embodiment shown in Figure 1, the coating layer 3, the head 2a, and the stem 2b of the supporting body 2 can have a section transverse to the axis L which has a substantially circular or elliptical shape. It is however understood that the size (for example the diameter) of the head 2a may vary as a function of the size (for example the diameter) of the hole F to be hidden, while the shape of the stem 2b depends on the type of element intended to be hidden. Preferably, the stem 2b may have an approximately tubular shape (Figure 1) so as to be engaged into a hole F, or a more complex shape designed to cling to the track of the hole F. For example, the free end of the stem 2b can preferably, but not necessarily, be suitably shaped so as to have a cavity/imprint 2c (Figure 2) structured to accommodate, i.e. to be coupled/hooked to the head of a screw, a bush, or an eccentric present in the hole/opening.

However, it is understood that the present invention is not limited to a hole cover cap 1 provided with a head 2a and/or a stem 2b having a circular/elliptical section, in fact, the head 2a and/or the stem 2b can each also have a different cross section, such as for example a polygonal (rectangular, square or the like) section.

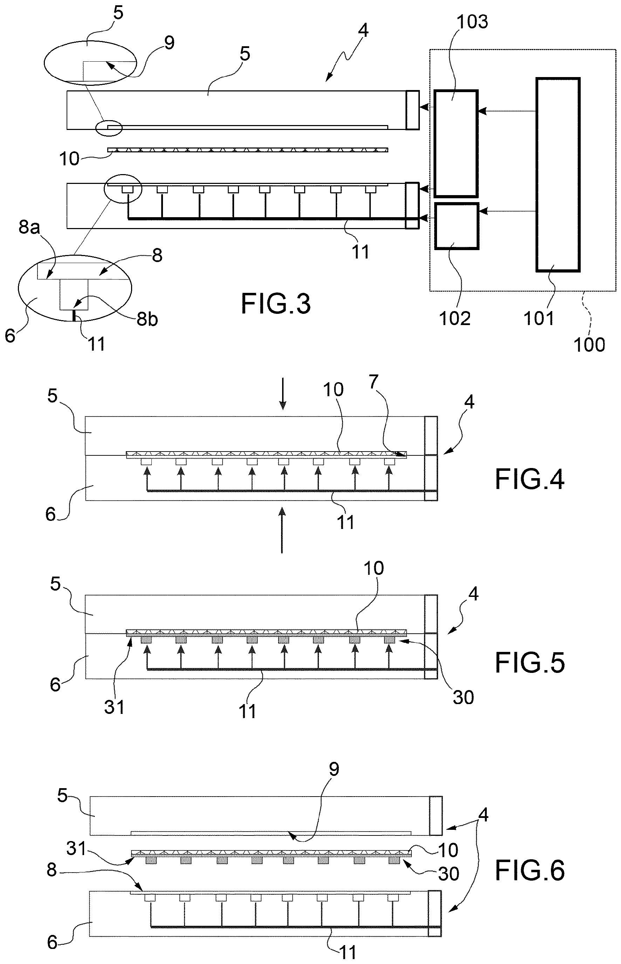

The operating steps of the method for producing the hole cover caps 1 of the type described above will be described below with reference to Figures 3 to 9.

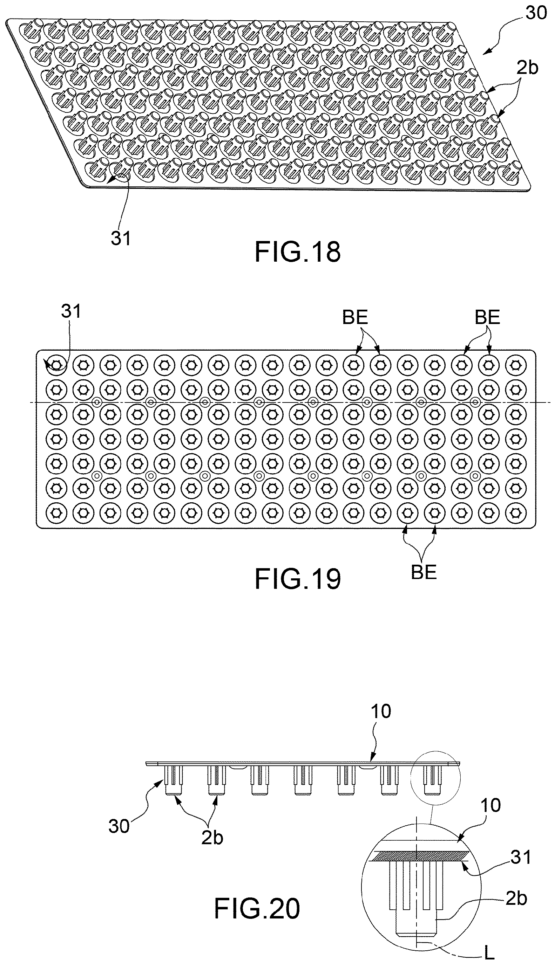

The method comprises: a moulding procedure by injection of a molten plastic material into an injection mould 4 to provide an object 30 (Figure 18) made of a plastic material containing a plurality of supporting bodies 2. According to a preferred exemplary embodiment, the supporting bodies 2 can be, for example, approximately adjacent to one another and coplanar. The method further comprises a step of fixing, onto the object 30, a coating sheet 10 that covers the outer surfaces of the heads 2a; and a cutting procedure, in which the object 30 and the sheet 10 undergo a cutting step to obtain the hole cover caps 1.

The method can preferably further comprise the step of printing the exposed surface of the coating sheet 10 on the base of the surface of the piece of furniture to be hidden. In particular, the method may comprise the step of over printing the exposed surface of the coating sheet 10 so as to aesthetically imitate thereon the finishing/material/colour/writing present on the surface of the piece of furniture (wall) on which the hole cover cap 1 is applied. The printing of the exposed surface of the coating sheet 10 on the base of the surface of the piece of furniture M (wall) to be hidden can be performed, for example, through rotogravure printing (rotogravure) and/or embossing operations which, as they are known, will not be further described if not in order to clarify that, for example, surface embossing can be accomplished by making the coating sheet pass through a group of rotating cylinders heated at high temperatures.

The injection moulding procedure may comprise the step of providing a moulding system/machine for injecting plastic material 100 (Figure 3), comprising at least one injection mould 4, and of providing the coating sheet 10 from which the coating layers 3 of the hole cover caps 1 will then be obtained. The coating sheet 10 has the same thickness and material as the coating layers 3, and its outer surface is over-printed so as to imitate the finishing/material/colour/writing present on the surface of the piece of furniture/wall on which the hole cover cap 1 is applied.

With reference to the example illustrated in Figures 3 to 6, the injection mould 4 may be formed by a first casing 5 and a second casing 6 made of metal, preferably with a parallelepiped shape, which are meant to be brought into abutment on one another in the area of one of the two larger faces, and are structured so as to form, at the contact surface between said casings 5 and 6, a closed chamber 7 shaped so as to trace a negative shape of the plastic hole cover caps 1 to be produced.

With reference to an exemplary embodiment shown in Figure 3, the closed chamber 7 may be shaped so as to comprise: an imprint 8 that is formed on the second casing 6 and is shaped so as to trace a negative shape of a plurality of supporting bodies 2 of the caps 1; and a cavity or seat 9 preferably, but not necessarily, formed on the first casing 5 facing the imprint 8, which, in use, is adapted to accommodate on the inside the coating sheet 10 in a position adjacent to the imprint 8.

In the example shown in Figure 3, the imprint 8 comprises a first cavity 8a preferably, but not necessarily, formed on the larger face of the second casing 6 which traces a negative shape of a thin plate-like body 31 (shown in Figures 18 and 19), preferably rectangular, with a thickness equal to the thickness of the heads 2a to be produced; and a plurality of second cavities 8b which are preferably formed on the second casing 6 (on the bottom of the first cavity 8a) so as to communicate with the first cavity 8a, and are each shaped so as to trace a negative shape of the stem 2b.

The thin plate-like body 31 defines a common plane on which the stems 2b lie. In the example shown in Figure 18, in fact, the stems 2b are arranged side by side, with one end on the thin plate-like body 31, and extend in a cantilever fashion from the same so that their corresponding longitudinal axes are approximately parallel to each other and approximately orthogonal to the inner surface of said thin plate-like body 31.

It is understood that the present invention is not limited to the embodiment of the injection mould 4 described above, in fact, it could also be different. For example, the seat 9 could be formed directly on the second casing 6 in a position adjacent to the first cavity 8a.

The injection mould 4 can be preferably provided with hot channels 11, which receive the plastic material in the liquid state provided by the system/machine 100, and inject it in a controlled manner, with a certain pressure, inside the closed chamber 7.

For this purpose, the system/machine 100 may be provided with an electronic control unit 101 which controls an injection moulding group 102 for injecting the molten plastic material into the closed chamber 7, and preferably a device 103 for the thermoregulation of the casings 5 and 6 which can be controlled by the electronic control unit 101 to maintain, during the injection moulding operations, the value of the average temperature of the plastic material in the seat 9 of said casings 5 and 6 within a predetermined temperature range.

With reference to the exemplary embodiment shown in Figures 3 to 6, the method comprises the steps of: opening the mould 4 so as to separate the casings 5 and 6 (Figure 3), inserting the coating sheet 10 in the closed chamber 7, preferably in the seat 9 (Figure 4), so that the coating sheet 10 lies on a reference plane parallel to the lying plane of the first cavity 8a; closing the casings 5 and 6 of the mould 4 so that the sheet 10 remains trapped inside the seat 9, remaining on the reference plane, with its inner surface facing the imprint 8; injecting a predetermined amount of plastic material in the liquid state into the imprint 8 so as to fill it completely (Figure 5) in order to produce the plastic object 30 (shown in Figures 18 and 19).

With reference to the example shown in Figure 18, the plastic object 30 thus obtained comprises the thin rectangular plate-like body 31 from which the heads 2a will then be obtained, and the stems 2b extending in a cantilever fashion from the plate-like body (31) orthogonal to the same.

During the injection, the molten plastic material present in the imprint 8 adheres to the inner face of the sheet 10, by permanently (rigidly) welding/attaching/fixing to the outer surface of the plate-like body 31 that will then form the heads 2a of the supporting body 2. In this step, the electronic control unit 101 can control the thermoregulation system 103 so as to control the cooling of the plastic material injected into the mould 4 to cause permanent (rigid) fixing of the coating sheet 10 to the outer surface of the plate-like body 31.

The method further comprises the step of cutting the coating sheet 10 and the plate-like body 31 to obtain therefrom the coating layers 3 and the corresponding heads 2a.

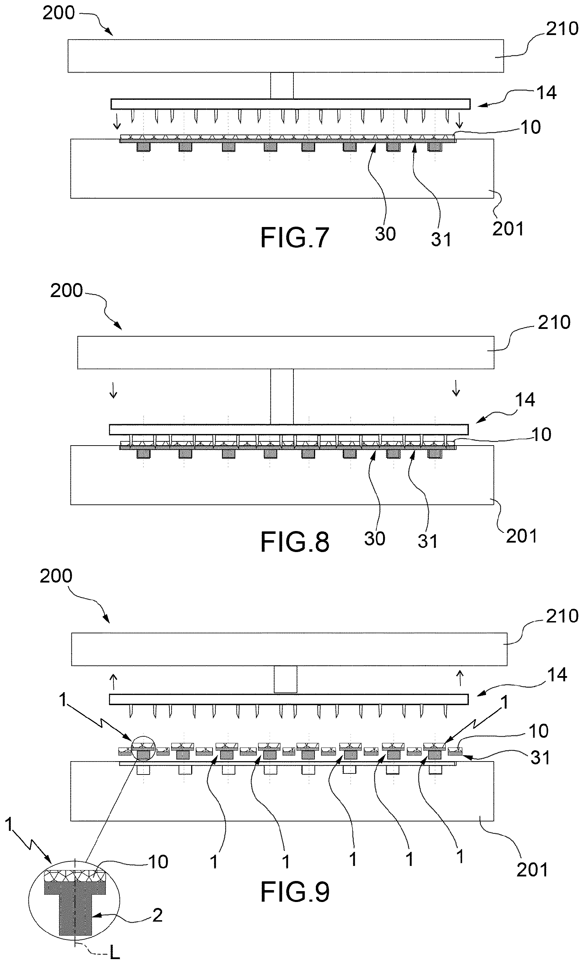

According to a preferred embodiment shown in Figures 7 and 8, the cutting operation may be performed by means of punching the coating sheet 10 and the underlying plate-like body 31. This operation can be carried out by means of a punching machine 200 (only schematically illustrated) adapted to punch the sheet 10 and the plate-like body 31. The punching machine 200 can be provided, for example, with a support base 201 shaped to accommodate the object 30 and the related sheet 10, at least one punch 14 shaped so as to have sharp profiles/edges corresponding to the outer edges BE (Figure 19) of the heads 2a to be obtained in the hole cover caps 1, and a handling assembly 210 which moves in a controlled manner the punch 14 to and from the support base 201 (preferably along a direction orthogonal to the plane on which the plate-like body 31 lies) so as to cause the sharp profiles/edges to cut the sheet 10 and the plate-like body 31 along the predetermined outer edges BE destined to form the heads 2a of the hole cover caps 1 to be manufactured (shown in Figure 19).

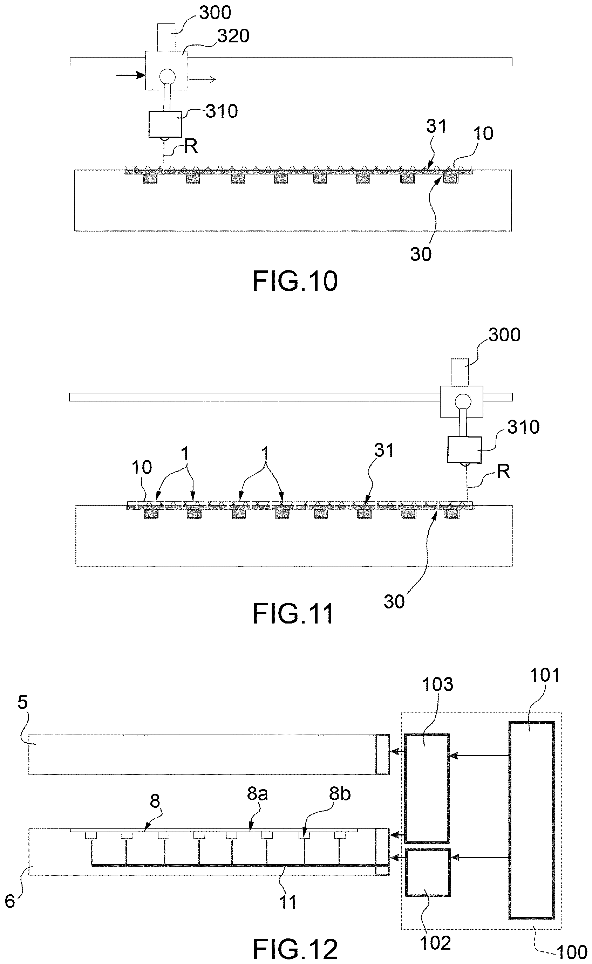

It is understood that the present method is not limited to a cutting operation performed by punching, but other types of cutting systems may be contemplated. For example, according to an alternative embodiment shown in Figures 10 and 11, the cutting operation can be performed by means of a laser cutting system 300. According to a possible exemplary embodiment schematically shown in Figures 10 and 11, the laser cutting system 300 may comprise a laser head 310 movable in space on one or more axes and designed to emit a laser beam R towards the plate-like body 31, a handling assembly 320 which moves the laser head 310 so that the laser beam cuts the sheet 10 and the underlying plate-like body 31 along the outer edges BE destined to form the edges of the heads 2a of the hole cover caps 1 to be produced, and an electronic control unit 330 that pilots the emission of the laser beam and controls the movement of the laser head 310 and of the handling assembly 320 so as to project the laser beam along the edges BE of the sheet 10 and the plate-like body 31 to be cut.

The advantages of the hole cover cap and of the method described above are the following.

The operation of co-moulding the sheet on the plate-like body allows for obtaining a head that, on the one hand, has a sufficient rigidity to stably support the coating layer and, on the other hand, is extremely thin. These two features reduce the observer's visual and tactile perception of the presence of the hole cover cap on the exposed surface of the piece of furniture. Moreover, the sheet can be printed so as to advantageously replicate, from an aesthetic point of view, any colour/finishing etc. of the exposed surface of the piece of furniture.

Lastly, it is clear that the hole cover cap and method described and illustrated herein can be subject to modifications and variations without however departing from the scope of the present invention, as defined in the appended claims.

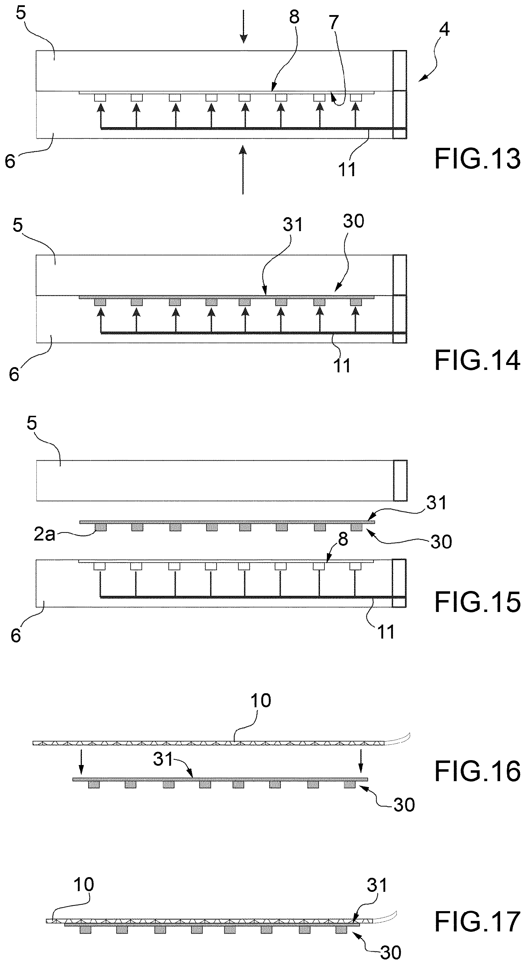

The embodiment illustrated in Figures 13 to 17 relates to a method that is similar to the method shown in Figures 3 to 11, the steps of which are indicated, where possible, using the same reference numbers that distinguish corresponding steps of the method described above. The method shown in Figures 13 to 17 differs from the method shown in Figures 3 to 11 as, instead of comprising the fixing of the coating sheet 10 to the object 30 during the injection moulding, it comprises fixing the sheet 10 by means of an adhesive material onto the outer surface of the plate-like body 31. Preferably, the sheet 10 is a sheet provided with an adhesive inner surface. Alternatively, the sheet 10 can be fixed to the outer surface of the plate-like body 31 through an additional adhesive layer, such as for example a double-sided adhesive film (not shown) or the like.

With reference to Figures 13 and 14, the method thus comprises the step of injecting the plastic material into the closed chamber 7 of the injection mould 4 (Figure 13), extracting the object 30 from the mould 4 (Figure 14), applying the adhesive coating sheet 10, or alternatively gluing the sheet 10 onto the outer surface of the plate-like body 31 through an adhesive substance or, alternatively or in addition, through the interposition of a double-sided adhesive film, fixing it permanently to the outer surface of the plate-like body 31, so as to cover it/coat it completely (Figures 16 and 17).

The method further comprises the step of performing the cutting operations described above. In particular, the method can comprise punching the coating sheet 10 and the plate-like body 31 as schematically shown in Figures 7 to 9 so as to obtain the heads 2a or, alternatively, laser cutting the coating sheet 10 and the plate-like body 31 as schematically shown in Figures 10 and 11.

## Claims

1. A method for the production of hole cover caps (1) made of plastic material structured to be installed in respective openings/holes (F) obtained on pieces of furniture (M) and/or walls to aesthetically hide said holes(F)/openings; each hole cover cap (1) comprises a substantially mushroom-shaped monolithic supporting body (2) made of plastic material provided with a head (2a) and with a stem (2b) that extends in a cantilever fashion from the head (2a), and a thin coating layer (3) that is permanently coupled to the outer surface of said head (2a) so as to coat it/cover it;
said method being **characterised in that** it comprises the following steps:
providing an injection mould (4) provided with a closed chamber (7) shaped so as to trace a negative shape of an object (30) made of plastic material comprising a plate-like body (31) and a plurality of stems (2b) associated with said hole cover caps (2) that extend side by side in a cantilever fashion from said plate-like body (31);
providing a coating sheet (10) having a major outer surface that is aesthetically associated with the exposed outer surface of the piece of furniture (M)/wall in which the hole cover cap (1) is installed;
injecting plastic material in the liquid state into said closed chamber (7) of said mould (4) so as to produce said object (30);
coupling said coating sheet (10) on the outer surface of said plate-like body (31);
cutting said sheet (10) and said plate-like body (31) along cut lines associated with the outer edges (BE) of said heads (2a) so as to obtain said hole cover caps (1).

2. The method according to claim 1, comprising the step of housing said coating sheet (10) in said closed chamber (7) of said mould (4) in a position adjacent to the major outer surface of said plate-like body (31) so that the plastic material injected adheres to a major inner surface of the sheet (19) so as to cause permanent fixing of the coating sheet (10) on the major outer surface of said plate-like body (31).

3. The method according to claim 1, comprising the step of fixing the major inner surface of said coating sheet (10) on the major outer surface of said plate-like body (31) by means of a layer of adhesive or a double-sided adhesive film.

4. The method according to claim 3, wherein said coating sheet (10) has said major inner surface coated by an adhesive substance.

5. The method according to any one of the preceding claims, comprising the step of making cuts on said coating sheet (10) and simultaneously on said plate-like body (31) along cut lines associated with the outer edges (BE) of said heads (2a) by means of a punching operation so as to obtain said heads (2a) from said coating sheet (10) and from said plate-like body (31).

6. The method according to any one of claims from 1 to 4, comprising the step of cutting said sheet (10) and said plate-like body (2a) along cut lines associated with the outer edges (BE) of said heads (2a) by means of a laser cutting operation so as to obtain said heads (2a).

7. The method according to any one of the preceding claims, wherein said supporting body (2) is made according to choice using one or more of the following materials: polypropylene, polystyrene, polyamide, polyethylene, copolymer.

8. The method according to any one of the preceding claims, wherein said coating sheet (10) comprises according to choice one or more of the following materials: ABS, MDF, PVC, PE, melamine edging, decorative papers, printed papers.

9. The method according to any one of the preceding claims, wherein said plastic object (30) comprises said thin plate-like body (31) from which said heads (2a) are then obtained, and the stems (2b) extending in a cantilever fashion from the plate-like body (31) orthogonal to the same.

10. The method according to any one of the preceding claims comprising the step of printing the exposed surface of said coating sheet (10) on the base of the surface of the piece of furniture to be hidden.

11. The method according to any one of the preceding claims, comprising the step of over printing the exposed surface of the coating sheet (10) to aesthetically imitate the finishing/material/colour/writing present on the surface of the piece of furniture or wall on which said hole cover cap (1) is applied.

12. A hole cover cap (1) made of plastic material structured to be installed in a hole (F)/opening obtained on a piece of furniture (M)/wall to aesthetically hide said hole(F)/opening, comprising
a mushroom-shaped monolithic supporting body (2) made of plastic material provided with a head (2a) and with a stem (2b) that extends in a cantilever fashion from the head (2a) along a longitudinal axis (L) ; said head (2a) comprising a plate-like portion that lies on a plane that is preferably transverse to said longitudinal axis (L)
and a thin coating layer (3) which is permanently coupled to the outer surface of said head (2a) so as to cover it, and has a major outer surface that is aesthetically equivalent to the exposed outer surface of the piece of furniture/wall in which the hole cover cap (1) is installed;
wherein said plate-like portion of said head (2a) is disc-shaped;
said hole cover cap (1) being **characterised in that** said head (2a) is thin and is structured so that it can be arranged with its inner surface, opposite to said coating layer (3), in abutment against the outer surface of the piece of furniture or wall surrounding said hole in which said stem (2b) is engaged so as to be approximately coplanar with the outer surface thereof, so as to hide said hole.

13. The hole cover cap (1) according to claim 12, wherein said supporting body (2) is made according to choice of polypropylene, polystyrene, polyamide, polyethylene, copolymer; said coating sheet (10) comprises according to choice: ABS, MDF, PVC, PE, melamine edging, decorative papers and/or printed papers.

14. The hole cover cap according to any one of claims 12 to 13, wherein said coating layer (3) has a thickness of between approximately 0.1 mm and approximately 1 mm and/or said head (2a) has a thickness of between approximately 0.1 mm and approximately 0.4 mm.

## Patentansprüche

1. Verfahren zur Herstellung von Lochabdeckungskappen (1) aus Kunststoff, die darauf ausgelegt sind, in entsprechenden Öffnungen/Löchern (F) auf Möbelstücken (M) und/oder Wänden installiert zu werden, um die genannten Löcher (F)/Öffnungen ästhetisch zu verbergen; wobei jede Lochabdeckungskappe (1) einen mit einem Kopf (2a) und mit einem Schaft (2b) ausgestatteten im Wesentlichen pilzförmigen, monolithischen Stützkörper (2) aus Kunststoff, der nach Art eines Vorsprungs von dem Kopf (2a) absteht, und eine dünne Deckschicht (3) umfasst, die fest mit der Außenfläche des genannten Kopfes (2a) verbunden ist, um diesen zu verkleiden/abzudecken;
wobei das genannte Verfahren **dadurch gekennzeichnet** ist, folgende Schritte zu umfassen:
Bereitstellung einer mit einer die negative Form eines Gegenstands (30) abzeichnenden geschlossenen Kammer (7) ausgestatteten Spritzgussform (4) aus Kunststoff, umfassend einen plättchenähnlichen Körper (31) und eine Vielzahl von mit den genannten Lochabdeckungskappen (2) verbundenen Schäften (2b), die Seite an Seite nach Art eines Vorsprungs von dem genannten plättchenähnlichen Körper (31) abstehen;
Bereitstellung einer Beschichtung (10) mit einer größeren Außenfläche, die ästhetisch mit der freiliegenden Außenfläche des Möbelstücks (M)/der Wand verbunden ist, in dem/der die Lochabdeckungskappe (1) installiert ist;
Einspritzen von Kunststoff im flüssigen Zustand in die genannte geschlossene Kammer (7) der genannten Form (4), um den genannten Gegenstand (30) herzustellen;
Verbindung der genannten Beschichtung (10) mit der Außenfläche des genannten plättchenähnlichen Körpers (31);
Zuschneiden der genannten Beschichtung (10) und des genannten plättchenähnlichen Körpers (31) entlang mit den Außenkanten (BE) der genannten Köpfe (2a) verbundener Schnittlinien, um die genannten Lochabdeckungskappen (1) zu erhalten.

2. Verfahren nach Anspruch 1, umfassend den Schritt des Unterbringens der genannten Beschichtung (10) in der genannten geschlossenen Kammer (7) der genannten Form (4) in einer an die größere Außenfläche des genannten plättchenähnlichen Körpers (31) angrenzenden Position, damit der eingespritzte Kunststoff an der größeren Innenfläche der Schicht (19) haftet, um eine feste Verbindung der Beschichtung (10) mit der größeren Außenfläche des genannten plättchenähnlichen Körpers (31) herzustellen.

3. Verfahren nach Anspruch 1, umfassend den Schritt des Befestigens der größeren Innenfläche der genannten Beschichtung (10) auf der größeren Außenfläche des plättchenähnlichen Körpers (31) mittels einer Schicht Klebstoff oder doppelseitigen Klebebands.

4. Verfahren nach Anspruch 3, bei dem die genannte größere Innenfläche der genannten Beschichtung (10) mit einem Klebstoff beschichtet ist.

5. Verfahren nach einem beliebigen der vorangegangenen Ansprüche, das den Schritt des Anbringens von Schnitten auf der genannten Beschichtung (10) und gleichzeitig auf dem genannten plättchenähnlichen Körper (31) entlang mit den Außenkanten (BE) der genannten Köpfe (2a) mittels eines Stanzvorgangs umfasst, um die genannten Köpfe (2a) aus der genannten Beschichtung (10) und dem genannten plättchenähnlichen Körper (31) zu erhalten.

6. Verfahren nach einem beliebigen der Ansprüche 1 bis 4, umfassend den Schritt des Schneidens der genannten Beschichtung (10) und des genannten plättchenähnlichen Körpers (2a) entlang mit den Außenrändern (BE) der genannten Köpfe (2a) verbundener Schnittlinien mittels eines Laserschneidvorgangs, um die genannten Köpfe (2a) zu erhalten.

7. Verfahren nach einem beliebigen der vorangegangenen Ansprüche, bei dem der genannten Stützkörper (2) nach Belieben unter Verwendung eines oder mehrerer der folgenden Werkstoffe hergestellt wird: Polypropylen, Polystyrol, Polyamid, Polyethylen, Copolymer.

8. Verfahren nach einem beliebigen der vorangegangenen Ansprüche, bei dem die genannte Beschichtung (10) nach Belieben einen oder mehrere der folgenden Werkstoffe umfasst: ABS, MDF, PVC, PE, Melaminkante, Dekorpapiere, bedruckte Papiere.

9. Verfahren nach einem der vorangegangenen Ansprüche, bei dem der genannte Kunststoffgegenstand (30) den genannten plättchenähnlichen Körper (31) umfasst, aus dem dann die genannten Köpfe (2a) erhalten werden und die Schäfte (2b), die nach Art eines Vorsprungs von dem plättchenähnlichen Körper (31) rechtwinklig zu diesem abstehen.

10. Verfahren nach einem beliebigen der vorangegangenen Ansprüche, umfassend einen Schritt des Bedruckens der frei liegenden Oberfläche der genannten Beschichtung (10) an der Basis der Oberfläche des zu verbergenden Möbelstücks.

11. Verfahren nach einem beliebigen der vorangegangenen Ansprüche, umfassend einen Schritt des Überdruckens der freiliegenden Oberfläche der Beschichtung (10), um das Finish/den Werkstoff/die Farbe/Schrift auf der Oberfläche des Möbelstücks oder der Wand, auf dem/der die genannte Lochabdeckungskappe (1) angebracht wird, ästhetisch zu imitieren.

12. Lochabdeckungskappe (1) aus Kunststoff, darauf ausgelegt, in einem Loch (F)/einer Öffnung auf einem Möbelstück (M)/einer Wand installiert zu werden, um dieses Loch (F)/diese Öffnung ästhetisch zu verbergen, umfassend einen mit einem Kopf (2a) und einem Schaft (2b) ausgestatteten pilzförmigen, monolithischen Stützkörper (2) aus Kunststoff, der nach Art eines Vorsprungs von dem Kopf (2a) entlang einer Längsachse (L) absteht; wobei der genannte Kopf (2a) einen plättchenähnlichen Abschnitt umfasst, der in einer vorzugsweise zu der genannten Längsachse (L) quer verlaufenden Ebene liegt
und eine fest mit der Außenfläche des genannten Kopfes (2a), um diesen zu verdecken, verbundene dünne Deckschicht (3), die eine größere Außenfläche aufweist, die ästhetisch der freiliegenden Außenfläche des Möbelstücks/der Wand entspricht, in der die Lochabdeckungskappe (1) installiert ist; wobei der genannte plättchenähnliche Abschnitt des genannten Kopfes (2a) scheibenförmig ist;
wobei die genannte Lochabdeckungskappe (1) **dadurch gekennzeichnet ist, dass** der genannten Kopf (2a) dünn und darauf ausgelegt ist, mit seiner Innenfläche gegenüber der genannten Deckschicht (3) gegen die Außenfläche des Möbelstücks oder der Wand anstoßend angeordnet zu werden und das genannte Loch zu umgeben, in das der genannte Schaft (2b) eingerastet ist, um ungefähr mit dessen Außenfläche komplanar zu sein und so das genannte Loch zu verdecken.

13. Lochabdeckungskappe (1) nach Anspruch 12, bei der der genannte Stützkörper (2) nach Belieben aus Polypropylen, Polystyrol, Polyamid, Polyethylen, Copolymer hergestellt ist; wobei die genannte Beschichtung (10) nach Belieben Folgendes umfasst: ABS, MDF, PVC, PE, Melaminkante, Dekorpapiere und/oder bedruckte Papiere.

14. Lochabdeckungskappe nach einem der Ansprüche 12 bis 13, bei der die genannte Deckschicht (3) eine Stärke zwischen ungefähr 0,1 mm und ungefähr 1 mm aufweist und/oder der genannte Kopf (2a) eine Stärke zwischen ungefähr 0,1 mm und ungefähr 0,4 mm aufweist.

## Revendications

1. Procédé de production d'un bouchon de trou (1) composé d'une matière plastique, destiné à être installé dans des orifices/trous (F) respectifs présents dans des pièces de meuble (M) et/ou des parois pour masquer esthétiquement lesdits trous/orifices (F) ; chaque bouchon de trou (1) comprend un corps de support (2) monolithique sensiblement en forme de champignon, composé d'une matière plastique, muni d'une tête (2a) et d'une tige (2b) qui s'étend en porte-à-faux depuis la tête (2a), ainsi qu'une fine couche de revêtement (3), couplée de manière permanente à la surface extérieure de ladite tête (2a) pour la revêtir/couvrir ;
ledit procédé étant **caractérisé en ce qu'**il présente les étapes suivantes:
mise à disposition d'un moule pour injection (4) muni d'une chambre fermée (7) ayant une forme telle qu'elle définit la forme négative d'un objet (30) composé d'une matière plastique, comprenant un corps en forme de plaque (31) et une série de tiges (2b) associées auxdits bouchons de trou (2), qui s'étendent côte à côte en porte-à-faux depuis ledit corps en forme de plaque (31) ;
mise à disposition d'une feuille de revêtement (10) ayant une face extérieure principale qui est assortie esthétiquement à la surface extérieure exposée de la pièce de meuble (M)/paroi, dans laquelle le bouchon de trou (1) sera installé ;
injection d'une matière plastique à l'état liquide dans ladite chambre fermée (7) dudit moule (4) de manière à produire ledit objet (30) ;
couplage de ladite feuille de revêtement (10) avec la surface extérieure dudit corps en forme de plaque (31) ;
découpe de ladite feuille (10) et dudit corps en forme de plaque (31) le long de lignes de découpe associées aux bords extérieurs (BE) desdites têtes (2a) pour obtenir lesdits bouchons de trou (1).

2. Procédé selon la revendication 1, comprenant l'étape d'insertion de ladite feuille de revêtement (10) dans ladite chambre fermée (7) dudit moule (4) en une position adjacente à la surface extérieure principale dudit corps en forme de plaque (31), de sorte que la matière plastique injectée adhère à une surface intérieure principale de la feuille (19) et qu'une fixation permanente de la feuille de revêtement (10) sur la surface extérieure principale dudit corps en forme de plaque (31) soit obtenue.

3. Procédé selon la revendication 1, comprenant l'étape de fixation de la surface intérieure principale de ladite feuille de revêtement (10) sur la surface extérieure principale dudit corps en forme de plaque (31) au moyen d'une couche d'adhésif ou d'un film adhésif double face.

4. Procédé selon la revendication 3, où ladite surface intérieure principale de ladite feuille de revêtement (10) est revêtue d'une substance adhésive.

5. Procédé selon l'une quelconque des revendications précédentes, comprenant l'étape de découpe de ladite feuille de revêtement (10) et simultanément, dudit corps en forme de plaque (31) le long de lignes de découpe associées au bords extérieurs (BE) desdites têtes (2a) par une opération d'estampage de manière à obtenir lesdites têtes (2a) à partir de ladite feuille de revêtement (10) et dudit corps en forme de plaque (31).

6. Procédé selon l'une quelconque des revendications 1 à 4, comprenant l'étape de découpe de ladite feuille de revêtement (10) et dudit corps en forme de plaque (2a) le long de lignes de découpe associées au bords extérieurs (BE) desdites têtes (2a) par une opération de découpe laser de manière à obtenir lesdites têtes (2a).

7. Procédé selon l'une quelconque des revendications précédentes, où ledit corps de support (2) est préparé, au choix, à l'aide d'une ou de plusieurs des matières suivantes : polypropylène, polystyrène, polyamide, polyéthylène, copolymère.

8. Procédé selon l'une quelconque des revendications précédentes, où ladite feuille de revêtement (10) comprend, au choix, une ou plusieurs des matières suivantes : ABS, MDF, PVC, PE, chants en mélamine, papiers décoratifs, papiers imprimés.

9. Procédé selon l'une quelconque des revendications précédentes, où ledit objet en matière plastique (30) comprend ledit corps en forme de plaque (31) fin à partir duquel sont obtenues les têtes (2a), et les tiges (2b) s'étendant en porte-à-faux depuis le corps en forme de plaque (31), de manière orthogonale à celui-ci.

10. Procédé selon l'une quelconque des revendications précédentes, comprenant l'étape d'impression de la surface exposée de ladite feuille de revêtement (10) sur la base de la surface de la pièce de meuble à masquer.

11. Procédé selon l'une quelconque des revendications précédentes, comprenant l'étape de surimpression de la surface exposée de la feuille de revêtement (10) pour imiter esthétiquement le fini/matériau/couleur/impression présent(e) sur la surface de la pièce de meuble ou la paroi sur laquelle ledit bouchon de trou (1) sera appliqué.

12. Bouchon de trou (1) constitué d'une matière plastique structurée pour être installée dans un trou (F)/orifice présent sur une pièce de meuble (M)/une paroi pour masquer esthétiquement ledit trou (F)/orifice, comprenant :
un corps de support (2) monolithique en forme de champignon, composé d'une matière plastique, muni d'une tête (2a) et d'une tige (2b) qui s'étend en porte-à-faux depuis la tête (2a) le long d'un axe longitudinal (L) ; ladite tête (2a) comprenant une partie en forme de plaque qui repose sur un plan qui est de préférence, transversal audit axe longitudinal (L)
et une fine couche de revêtement (3), couplée de manière permanente à la surface extérieure de ladite tête (2a) pour la couvrir, elle présente une surface extérieure principale esthétiquement équivalente à la surface extérieure exposée de la pièce de meuble/paroi dans laquelle le bouchon de trou (1) sera placé ;
où ladite partie en forme de plaque de ladite tête (2a) a la forme d'un disque ;
ledit bouchon de trou (1) étant **caractérisé en ce que** ladite tête (2a) est fine et présente une structure telle qu'elle puisse être agencée avec sa surface intérieure, opposée à ladite couche de revêtement (3), en butée contre la surface extérieure de la pièce de meuble ou de la paroi entourant ledit trou dans lequel est engagée ladite tige (2b) de manière à être approximativement coplanaire avec sa surface extérieure, et masquer ledit trou.

13. Bouchon de trou (1) selon la revendication 12, où ledit corps de support (2) est préparé au choix, en polypropylène, polystyrène, polyamide, polyéthylène, copolymère ; ladite feuille de revêtement (10) comprend au choix : ABS, MDF, PVC, PE, chants en mélamine, papiers décoratifs et/ou papiers imprimés.

14. Bouchon de trou selon l'une quelconque des revendications 12 à 13, où ladite couche de revêtement (3) présente une épaisseur située dans l'intervalle allant d'environ 0,1 mm à environ 1 mm et/ou ladite tête (2a) présente une épaisseur située dans l'intervalle allant d'environ 0,1 mm à environ 0,4 mm.
